# EUROPEAN PATENT APPLICATION

(11) **EP 4 761 175 A1**
(43) Date of publication of application: **17.06.2026**
(21) Application number: 24218966.0
(22) Date of filing: 11.12.2024
(51) Int. Cl.: H04L 9/40

(54) **COMPUTER-IMPLEMENTED METHOD FOR GENERATING A SECURITY CONFIGURATION FOR A NETWORK SYSTEM**

(71) Applicant: PlaxidityX Ltd., 5252171 Ramat Gan (IL)
(72) Inventor: Lavi, Oron, 5252171 Ramat Gan (IL); Bari-Ephraim, Yael, 5252171 Ramat Gan (IL); Ben Tzvi, Ran, 5252171 Ramat Gan (IL)
(74) Representative: Aumovio Corporation

(57) **Abstract**

The invention relates to a computer-implemented method for generating a security configuration (34) for a network system (10), the network system (10) including a plurality of interconnected network devices (12) for network communication, wherein at least one network device (12) includes a management module (18) for managing activity in said network device (12) according to a corresponding activity configuration (32).

## Description

### TECHNICAL FIELD

The invention relates to a computer-implemented method for generating a security configuration for a network system. The invention further relates to a computing device, a computer program, configuration data, a computer-readable storage medium, a network device, and a network system.

### BACKGROUND

In the era of software-defined vehicles, the integration of numerous electronic control units (ECU), software modules, and extensive intra- and inter-vehicle communication networks has brought up challenges related to cybersecurity of these vehicles. For vehicle manufactures, multiple suppliers may provide single components in a default cybersecurity setup. Thus, possible threats coupled with regulatory mandates, may call for the adoption of cyber protection mechanisms by the vehicle manufacturers across various vehicle networks such as CAN and Ethernet.

To safeguard Ethernet networks, manufacturers may deploy diverse security strategies with varying levels of protection. These strategies include the hardening of the network stacks within ECUs - whether they are based on classic AUTOSAR or Linux - through the configuration of internet protocol (IP) tables. Furthermore, the integration of specialized cyber protection solutions, such as firewalls and intrusion detection and prevention systems (IDPS), may provide targeted defense capabilities. These systems, external to the core functionalities of the ECUs, may offer centralized cybersecurity measures, either within individual ECUs or at network junctures like switches.

### SUMMARY OF THE INVENTION

The object of the invention is to provide a generalized method for tailoring security measures to specific compositions of network systems.

To achieve this object, the invention provides a computer-implemented method for generating a security configuration for a network system according to claim 1. A computing device, a computer program, configuration data, a computer-readable storage medium, a network device, and a network system are subject-matter of the parallel claims. Advantageous embodiments of the invention are subject-matter of the dependent claims.

In one aspect, the invention provides a computer-implemented method for generating a security configuration for a network system, preferably a vehicle network system, the network system including a plurality of interconnected network devices for network communication, wherein at least one network device includes a management module for managing activity in said network device according to a corresponding activity configuration, the method comprising:
a) Automatically determining network system information based on the one or more network devices connected with said at least one network device; and
b) Automatically generating, for said at least one management module, a corresponding security configuration based on the network system information determined in step a).

Preferably, the corresponding security configuration is suitable for adapting said at least one network device for secure network communication in the network system.

Preferably, a plurality of network devices respectively include at least one management module and for each of said management modules a corresponding security configuration is generated according to steps a) and b).

Preferably, a corresponding security configuration is generated according to steps a) and b ) for a plurality of management modules of the same network device.

Preferably, the activity includes network accessing, network communication, data accessing, and/or data processing.

Preferably, each management module respectively includes one, several, or all of the following:
- a network access control module for permitting and/or denying network access;
- a firewall module for filtering, permitting, and/or denying network communication;
- an intrusion detection module for monitoring malicious activity and/or policy violation;
- a network routing module for forwarding and/or distributing network communication;
- a data access control module for permitting and/or denying data access and/or data processing; and/or
- a priority management module for managing network communication and/or data processing.

Preferably, the network system information is further based on:
a1) information on said at least one network device, information on one or more network devices that are directly and/or indirectly connected with said at least one network device, information on one or more network devices connected for network communication from and/or to said at least one network device, and/or information on all network devices in the network system; and/or a2) a topology of the network system, wherein the topology includes one or more network connections between two corresponding network devices and, preferably,
a direction of said one or more network connections; and/or
a3) an architecture of the network system, between the network devices, and/or based on the network communication, said architecture preferably including a network device as client and a network device as server; and/or
a4) simulated and/or actual recorded activity; and/or
a5) a predefined activity configuration; and/or
a6) a user input.

Preferably, the network system information further includes one, several, or all of the following:
- a network port identifier for identifying a network protocol;
- a physical and/or logical port identifier for identifying a physical or logical port, respectively,
- a network address and/or a network resource identifier;
- a network access control identifier for authenticating and/or authorizing network activity;
- a network message identifier for identifying a network message;
- a data permission for defining permissions for data accessing and/or data processing;
- a process identifier for identifying a data process;
- a priority level for network communication and/or data processing;
- information on an encryption and/or compression method;
- information on a service application; and/or
- any other information and/or activity parameter related to any network device and/or activity thereof in the network system.

Preferably, step b) further comprises one or both of the following:
b1) Defining instructions for adding, removing, changing, increasing, decreasing, enabling, disabling, and/or hardening one or more activity parameters related to activity in the network system; and/or
b2) Defining one or more security rules for managing activity.

Preferably, step b) further comprises:
b3) Defining a global security scale for network communication in the network system, the global security scale including a plurality of global security levels; and
b4) Generating, for each global security level, a corresponding security configuration that is associated with the respective global security level.

Preferably, step b) further comprises:
b5) Deducing an expected activity in the network system based on the network system information determined in step a);
b6) Comparing the expected activity with a simulated and/or actual recorded activity in the network system; and
b7) Generating the corresponding security configuration based on step b6).

Preferably, step b) further comprises:
b8) Generating the security configuration based on a type, architecture, syntax, programming language, and/or operating system related to said at least one network device and/or management module thereof.

Preferably, the method further comprises:
c) Comparing the generated security configuration with a predefined activity configuration by tracking and/or highlighting differences therebetween.

Preferably, the method further comprises:
d1) Adapting said at least one network device for secure network communication by applying the corresponding security configuration to said at least one network device and/or management module thereof.

Preferably, step d) further comprises:
d2) Selecting a global security level for network communication in the network system, and adapting a plurality of network devices for network communication on the selected global security level by applying to a plurality of different network devices and/or management modules thereof corresponding security configurations that are associated with the selected global security level.

In another aspect, the invention provides a computing device comprising means adapted to execute the steps of the method according to any of the preceding embodiments.

Any feature, aspect, and/or advantage that is described herein with respect to embodiments of the computing device may optionally apply to embodiments of the method, and vice versa.

In another aspect, the invention provides a computer program comprising instructions to cause a computing device to execute the steps of the method according to any of the preceding embodiments.

Any feature, aspect, and/or advantage that is described herein with respect to embodiments of the computer program may optionally apply to embodiments of the method and/or the computing device, and vice versa.

In another aspect, the invention provides configuration data comprising instructions to cause at least one network device to adapt for secure network communication in a network system according to a corresponding security configuration, the corresponding security configuration being generated based on the computer-implemented method according to any of the preceding embodiments.

Any feature, aspect, and/or advantage that is described herein with respect to embodiments of the configuration data may optionally apply to embodiments of the method, the computing device, and/or the computer program, and vice versa.

In another aspect, the invention provides a computer-readable storage medium having stored thereon the computer program and/or the configuration data.

Any feature, aspect, and/or advantage that is described herein with respect to embodiments of the computer-readable storage medium may optionally apply to embodiments of the method, the computing device, the computer program, and/or the configuration data, and vice versa.

In another aspect, the invention provides a network device for network communication in a network system, the network device comprising means adapted for secure network communication in the network system based on the method according to any of the preceding embodiments and/or the configuration data.

Preferably, the network device respectively includes one, several, or all of the following: an electronic control unit, a modem, a switch, a router, a telematic control unit, a virtual machine, and/or gateway.

Any feature, aspect, and/or advantage that is described herein with respect to embodiments of the network device may optionally apply to embodiments of the method, the computing device, the computer program, the configuration data, and/or computer-readable storage medium, and vice versa.

In another aspect, the invention provides a network system, comprising a plurality of interconnected network devices for network communication, the plurality including at least one adapted network device.

Preferably, the network system is configured as and/or includes a vehicle network system, a CAN network system, an IoT network system, a manufacturing network system, and/or assembly line network system.

Any feature, aspect, and/or advantage that is described herein with respect to embodiments of the network system may optionally apply to embodiments of the method, the computing device, the computer program, the configuration data, the computer-readable storage medium, and/or the network device, and vice versa.

Embodiments of the invention preferably have the following advantages and effects:
The effective deployment of security measures in vehicles may require precise configuration, tailored to unique network parameters including protocols, addresses, and specific message identifiers. A manual configuration of these security components, especially in a context involving multiple ECUs from various suppliers, may be prone to inaccuracies or overwhelming due to the high number of components.

Preferred embodiments of the invention address this challenge by introducing a unified, centralized method for configuring all pertinent security mechanisms.

Leveraging different descriptors of the vehicle's systems, such as AUTOSAR configuration, Linux configurations, network traffic configuration, and/or network recordings/simulations, preferred embodiments of the invention automate the majority of the configuration process. This not only may streamline the initial setup, but also may simplify subsequent updates in response to changes in the network configuration.

By consolidating the configuration process into a single method that preferably utilizes the different descriptors of the vehicle's systems, preferred embodiments may significantly enhance the accuracy and efficiency of deploying cyber protection mechanisms across the vehicle's network, thereby eventually reinforcing its defense against the ever-evolving cyber threat landscape.

Preferred embodiments may firstly reduce the attack surface for the network system, secondly determine optimal devices' security configurations, and thirdly create different security levels for the network system.

Vulnerable areas in the network are preferably pinpointed. Preferably, embodiments allow a comparison between the current network security configuration to create a new network security configuration and may preferably highlight the new additions and removals from the configuration of the devices. This may allow to better review and to track changes accurately as eventually requested according to engineering development standards.

Preferred embodiments of the invention may further create predefined security levels/modes for the network system to allow response templates to be activated per a need in the field, changing the level of security. Such predefined security levels/modes may include, for example:
(i) none: all traffic is allowed;
(ii) low: same as none, enable recording and DOS protection when applicable;
(iii) medium: blocks all outgoing traffic except specific critical communication protocols; and
(iv) high: blocks all outgoing traffic.

Preferred embodiments of the invention automatically generate a set of rules for a firewall mechanism running as part of an ethernet switch or CPU deployed inside a vehicle, either as hardware or software. The configuration may be generated by inspecting descriptors of the complete vehicle network behavior and/or defined services.

Multiple different management mechanisms or modules, such as network access control modules, firewall modules, intrusion detection modules, network routing modules, data access control modules, priority management modules, etc. may exist in the vehicle, that may need to be configured in a way that limits the network traffic as much as possible without preventing proper communications. Today, these firewalls may be configured by hand, usually in a trial-and-error methodology until they reach a working state. This configuration process may be inaccurate, consumes time and effort, and may create mistakes that need to be identified and corrected throughout the development cycle. This may result in misconfigured management modules, since manual configuration leaves holes in the rules that permit malicious traffic or block certain traffic and hurt functionality.

Preferred embodiments of the invention may enable to generate efficient and secured ECU products, may prepare - in advance - a suitable configuration for an ECU in a vehicle, specifically may create an automated configuration for the ECU features, e.g., network ports, routing, quality of service (QoS), etc.

Embodiments of the invention preferably translate a representation of an expected network traffic and priorities in different vehicle states for each node in the network, to a set of rules, in a language supported by each network element (modem, switch, firewall).

In summary, embodiments of the invention preferably enable one, several, or all of the following features, advantages, effects, and/or aspects:
- Collect information on the expected behavior of the entire network and ECUs, from: i) functional descriptors of the system, services, ports, routing information, subnet, etc.; and/or ii) simulated traffic and/or actual recorded traffic; and/or
- Unify all ECUs' traffic and information, to maintain a single representation of the network requirements; and/or
- Generate network definitions for each firewall, QoS element in the network (i.e., QoS definitions and tagging for the TCU, firewall rules for the gateway switch, and/or additional rules for the IP tables of the Linux ADAS ECU), and preferably automatically apply each definition to the correct network device in the network; and/or
- Create firewall ingress/egress rules: i) create multiple sets of rules to accommodate for different potential vehicle states (driving, parking, service, software update). For example, certain traffic will be blocked in the driving state, but enabled during service; and/or ii) define ingress/egress rules. For example, accept/drop packets based on MAC address, IP address, subnet, port. For example, tag QoS VLAN priority for specific streams automatically; and/or
- Automatically define QoS profiles that prioritize different network functions that can be set for each global security level; and/or
- Automatically add rules to block and/or allow only known URLs defined by the method; and/or
- Automatically define DMZ profile for manufacturing/testing purposes; and/or
- Define stateful inspection; and/or
- Configure URL filtering/parental control-block predetermined URLs; and/or
- Configure port forwarding/port triggering; and/or
- Configure access control.

### BRIEF DESCRIPTION OF THE DRAWINGS

Embodiments of the invention are now explained in more detail with reference to the accompanying drawings of which
Fig. 1 shows an embodiment of a network system;
Fig. 2 shows a first embodiment of a computer-implemented method for generating a security configuration for the network system;
Fig. 3 shows a second embodiment of the computer-implemented method;
Fig. 4 shows a third embodiment of the computer-implemented method; and
Fig. 5 shows a fourth embodiment of the computer-implemented method.

### DETAILED DESCRIPTION OF THE DRAWINGS

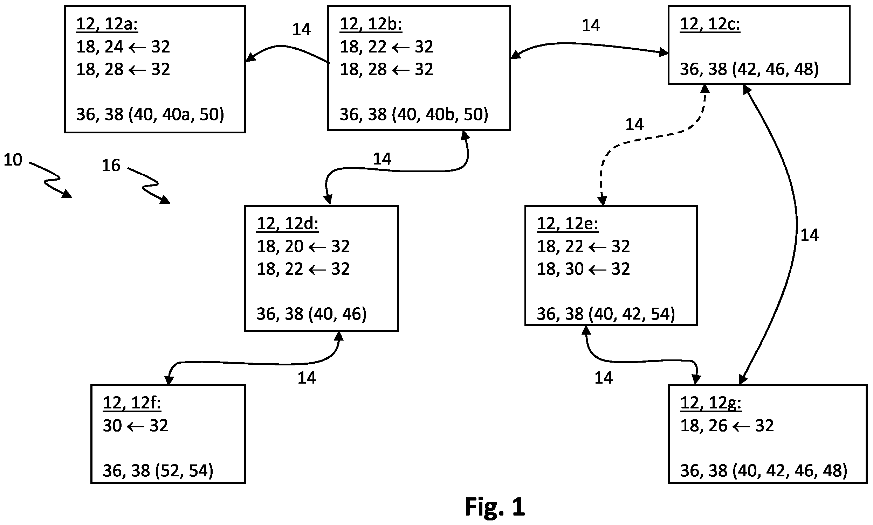

Fig. 1 shows an embodiment of a network system 10.

The network system 10 includes a plurality of interconnected network devices 12 for network communication. The network system 10 as shown in Fig. 1 includes seven network devices 12a-12g. Each network device 12, 12a-12g respectively may be configured as and/or include, for example, an electronic control unit, a modem, a switch, a router, a telematic control unit, a virtual machine, and/or a gateway. For building the network system 10, the network devices 12, 12a-12g are directly and/or indirectly connected with each other via one or more network device-related network connections 14.

The network system 10 may be configured as and/or include a vehicle network system, a CAN network system, a telecommunication network system, an IoT network system, and/or an Ethernet network system.

The arrangement of the one or more network connections 14 may be considered as a topology 16 of the network system 10. According to the network topology 16 as shown in Fig. 1, the first network device 12a is connected with the second network device 12b; the second network device 12b is connected with the first network device 12a, the third network device 12c, and the fourth network device 12d; the third network device 12c is connected with the second network device 12b and the seventh network device 12g; and so on as can be inferred from Fig. 1.

Each of the network connections 14 may be configured unidirectional or bidirectional, respectively. In the present case, the network connection 14 between the first network device 12a and the second network device 12b is configured unidirectional and is directed from the second network device 12b to the first network device 12a. The remaining network connections 14 are configured bidirectional. Thus, the first network device 12a may only receive network communication from the second network device 12b, but not transmit network communication thereto. Each remaining network devices 12b-12g may, respectively, receive and transmit network communication from and to the one or more corresponding connected network devices 12.

In the present embodiment, the network devices 12, 12a, 12b, 12d-12g include a management module 18 for managing activity in the respective network device 12, 12a-12g. In this context, an "activity" may be understood as network accessing, network communication, data accessing, and/or data processing.

Each management module 18 may, respectively, include a network access control module 20, a firewall module 22, an intrusion detection module 24, a network routing module 26, a data access control module 28, and/or a priority management module 30. Other management modules 18 are possible within the scope of the invention.

In the present example, the first network device 12a includes an intrusion detection module 24 and a data access control module 28; the second network device 12b includes a firewall module 22 and a data access control module 28; the third network device 12c includes no management module 18; and so on as can be inferred from Fig. 1.

Each management module 18 may, respectively, be configured for managing, handling, monitoring, denying/allowing, filtering, prioritizing, and/or controlling activity in the associated network device 12, 12a, 12b, 12d-12g according to a corresponding activity configuration 32. For example, the activity configuration 32 for the firewall module 22 may include one or more activity rules to filter, permit and/or deny network communication including certain data. The activity configuration 32 for the data access control module 28 may, for example, include one or more activity rules to permit and/or deny accessing to and/or processing of selected data, in general and/or related to any predefined user, group, process, and/or network device 12. The activity configuration 32 for the priority management module 30 may include one or more activity rules for priority managing network communication and/or data processing, etc.

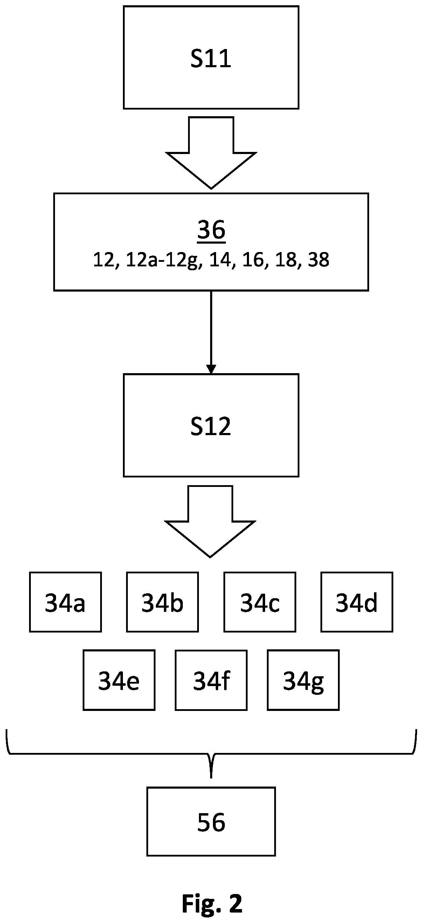

Fig. 2 shows a first embodiment of a computer-implemented method for generating a security configuration 34 for the network system 10.

In a step S11, the method includes:
- Automatically determining network system information 36 based on the plurality of network devices 12, 12a-12g.

The network system information 36 may be based on information on the network devices 12, 12a-12g and/or the network topology 16 of the network system 10, such as the one or more network connections 14. For example, the network system information 36 may include information whether and/or which one or more management modules 18 are available in the corresponding network devices 12, 12a-12g.

The network system information 36 may further be based on simulated and/or actual recorded activity in the network system 10. Activity may be simulated and/or recorded, for example, based on one or more log files. The network system information 36 may further be based on a predefined activity configuration 32 and/or a user input.

The network system information 36 may be determined for each network device 12, 12a-12g and/or corresponding management module 18 separately. For example, for the first network device 12a, the network system information 36 may be based on information on the first network device 12a and/or on information on the second network device 12b that is connected for network communication to the first network device 12a. For the second network device 12b, the network system information 36 may be based on information on the first network device 12a, the third network device 12c, and/or the fourth network device 12d that are connected for network communication from and to the second network device 12b.

The network system information 36 may also be determined for the network system 10 comprehensively or holistically. The network system information 36 may be related to all network devices 12, 12a-12g and/or available management modules 18 of the network system 10, but may also be related to a selection thereof, only.

The network system information 36 may include one or more activity parameters 38. For example, the network system information 36 may include one or more network port identifiers 40 for identifying a network protocol. The network system information 36 may include a first port identifier 40a for identifying a transmission control protocol (TCP) that is related to activity of the first network device 12a. The network system information 36 may further include a second port identifier 40b for identifying a user datagram protocol (UDP) that is related to activity of the second network device 12b.

The network system information 36 may further include one or more physical and/or logical port identifiers for identifying a physical or logical port, respectively. The network system information 36 may further include one or more network addresses 42 (such as IP and/or MAC addresses) that are, respectively, associated with the network devices 12, 12a-12g and/or activity thereof. The network system information 36 may further include one or more network resource identifiers 44 (such as URLs) that are, respectively, associated with the network devices 12, 12a-12g. The network system information 36 may further include one or more network access control identifiers 46 (such as network addresses 42, network permissions, keys, encryption modes such SHA-2) for authenticating and/or authorizing network activity that is associated with the network devices 12, 12a-12g.

The network system information 36 may further include one or more network message identifiers 48 (such as a header and/or specific level) for identifying a network message. The network system information 36 may further include one or more data permissions for defining permissions for users, groups, processes, and/or network devices 12 for data accessing and/or data processing. The network system information 36 may further include one or more process identifiers 52 (such as PIDs) for identifying a data process. The network system information 36 may further include one or more priority levels 54 for network communication and/or data processing. The network system information 36 may further include information on an encryption and/or compression method and/or information on a service application (such as IVI telematics, interfaces, Wi-Fi°, Bluetooth°, etc.).

In general, the network system information 36 may include any information and/or activity parameter 38 that is related to any network device 12, 12a-12g and/or activity thereof in the network system 10 and that can be used for the activity configuration 32 and/or for configuring the one or more management modules 18.

In a step S12, the method includes:
- Automatically generating, for each management module 18, a corresponding security configuration 34 based on the network system information 36.

For example, a first security configuration 34a may be generated for the intrusion detection module 24 and/or the data access control module 28 of the first network device 12a; a second security configuration 34b may be generated for the firewall module 22 and/or the data access control module 28 of the second network device 12b; a third security configuration 34c for the third network device 12c may be empty, null, omitted, and/or non-existent; and so on as can be inferred from Fig. 1 and 2.

Each security configuration 34 may, respectively, be based on a type, architecture, syntax, programming language, and/or operating system related to the corresponding network device 12, 12a-12g and/or management module 18 thereof.

Preferably, the security configuration 34 includes one or more instructions for adding, removing, changing, increasing, decreasing, enabling, disabling, and/or hardening or write-protecting one or more activity parameters 38, respectively. In general, the security configuration 34 may include one or more security rules for the one or more management modules 18 in order to manage activity in the network system 10.

For example, the security configuration 34 may include one or more instructions for the network access control module 20 to open/close a network port that may be selected/deselected according to the network port identifier 40. The security configuration 34 may further include one or more instructions, such as data permissions 50 for users and/or priority levels 54 for the data access control module 28 or the priority management module 30, respectively. The security configuration 34 may further include one or more ingress and/or egress rules for the firewall module 22 in order to manage incoming and/or outgoing network communication, respectively. The security configuration 34 may further include one or more routing rules for the network routing module 26 in order to manage routing in the network system 10 according to allowed/disallowed network addresses 42.

The security configurations 34 may be included in configuration data 56, such as a separate installation file for each security configuration 34. Additionally, or alternatively, the security configurations 34 may be included in configuration data 56 in form of a combined or comprehensive file.

The generated security configurations 34 may further be compared with a predefined activity configuration 32 by tracking and/or highlighting differences therebetween.

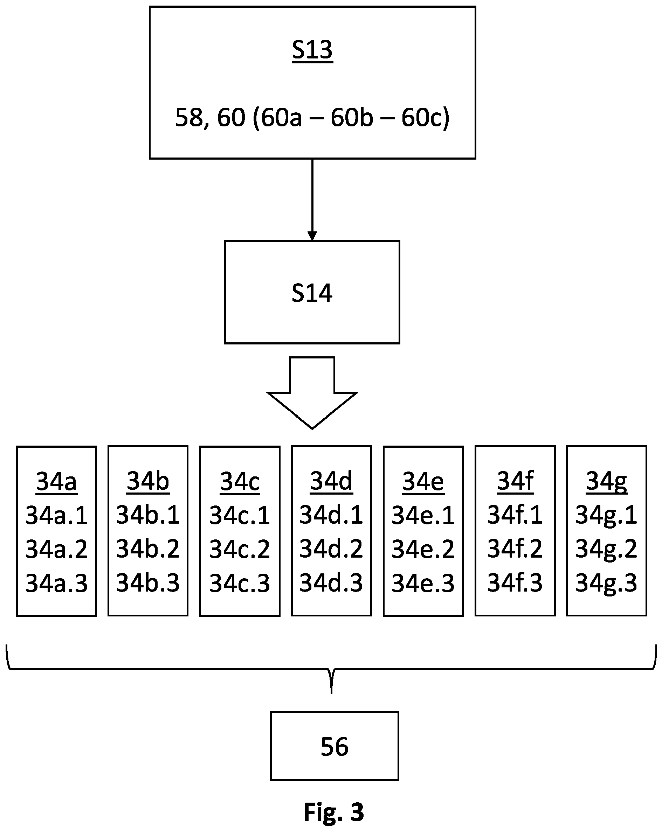

Fig. 3 shows a second embodiment of the computer-implemented method. The second embodiment includes the steps S11 and S12 (not shown).

In a step S13, the method includes:
- Defining a global security scale 58 for network communication in the network system 10.

The global security scale 58 includes a plurality of global security levels 60. For example, the global security scale 58 may include a first global security level 60a ("high security", "safety operation mode", etc.), a second global security level 60b ("medium security", "normal operation mode", etc.), and a third global security level 60c ("low security", "maintenance operation mode", etc.).

In a step S14, the method includes:
- Generating, for each global security level 60, 60a, 60b, 60c, a corresponding security configuration 34 that is associated with the respective global security level 60, 60a, 60b, 60c.

For example, the security configurations 34a-g may, respectively, include security configurations 34a.1-3, 34b.1-3, 34c.1-3, 34d.1-3, 34e.1-3, 34f.1-3, and 34g.1-3.

The security configurations 34a.1-3, 34b.1-3, 34c.1-3, 34d.1-3, 34e.1-3, 34f.1-3, and 34g.1-3 may be included in the configuration data 56, such as the separate installation file for each security configuration 34 and for each global security level 60. Additionally, or alternatively, the security configurations 34a.1-3, 34b.1-3, 34c.1-3, 34d.1-3, 34e.1-3, 34f.1 -3, and 34g.1-3 may be included in the configuration data 56 in form of a combined or comprehensive file.

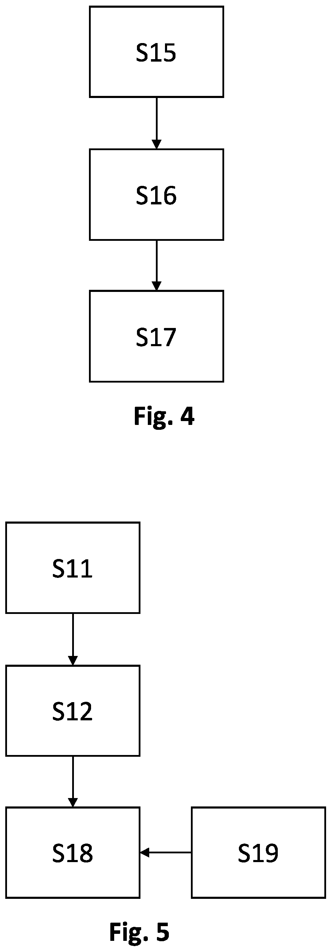

Fig. 4 shows a third embodiment of the computer-implemented method. The third embodiment includes the steps S11 and S12 (not shown). The third embodiment may further include the steps S13 and S15 (not shown).

In a step S15, the method includes:
- Deducing an expected activity in the network system 10 based on the network system information 36 determined in step a).

For example, the expected activity may be an expected activity, such as network communication or traffic, in the network system 10. The expected activity may be deduced from the network system information 36, for example, the predefined activity configuration 32 and/or the network topology 16.

In a step S16, the method includes:
- Comparing the expected activity with a simulated and/or actual recorded activity in the network system 10.

The comparison may identify one or more contradictions between the expected activity and the simulated and/or actual recorded activity. For example, according to the network system information 36, such as the network topology 16 according to Fig. 1, network communication between the third network device 12c and the fifth network device 12e is not expected to happen. However, simulated and/or actual recorded activity may indicate a (hidden) network connection 14 (see dashed line in Fig. 1) between the third network device 12c and the fifth network device 12e.

In a step S17, the method includes:
- Generating the corresponding security configuration 34 based on step S16.

Referring again to the example, the security configurations 34 of the management modules 18 of the third network device 12c and/or the fifth network device 12e may be configured such that any hidden network connection 14 between said network devices 12c, 12e is broken up, for example.

Fig. 5 shows a fourth embodiment of the computer-implemented method. The fourth embodiment includes the steps S11 and S12. The fourth embodiment may further include the steps S13 and S14 (not shown) and/or the steps S15 to S17 (not shown).

Preferably, the security configurations 34 are suitable for adapting the network devices 12, 12a-12g for secure network communication in the network system 10, respectively.

In a step S18, the method includes:
- Adapting the plurality of network devices 12, 12a-12g for secure network communication by applying the corresponding security configurations 34 to the network devices 12, 12a-12g and/or the management modules 18 thereof.

In a step S19, the step S18 may include:
- Selecting a global security level 58 for network communication in the network system 10; and
- Adapting the plurality of network devices 12, 12a-12g for network communication on the selected global security level 60 by applying to different network devices 12, 12a-12g and/or management modules 18 thereof the corresponding security configurations 34 that are associated with the selected global security level 60.

Embodiments of the invention further relate to a computing device (not shown) comprising means adapted to execute the embodiments of the method. Embodiments of the invention further relate a computer program (not shown) comprising instructions to cause a computing device to execute the embodiments of the method.

Embodiments of the invention further relate to the configuration data 56 comprising instructions to cause at least one network device 12, 12a-12g to adapt for secure network communication in the network system 10 according to the corresponding security configuration 34. Embodiments of the invention further relate to a computer-readable storage medium (not shown) having stored thereon the computer program and/or the configuration data 56.

Embodiments of the invention further relate to any network device 12, 12a-12g for network communication in the network system 10 that is adapted for secure network communication in the network system 10 based on the method and/or the configuration data 56. Embodiments of the invention further relate to any network system 10, comprising a plurality of interconnected network devices 12, 12a-12g for network communication, wherein the plurality includes at least one adapted network device 12, 12a-12g.

### REFERENCE SIGNS

10 network system
12 network device
12a first network device
12b second network device
12c third network device
12d fourth network device
12e fifth network device
12f sixth network device
12g seventh network device
14 network connection
16 network topology
18 management module
20 network access control module
22 firewall module
24 intrusion detection module
26 network routing module
28 data access control module
30 priority management module
32 activity configuration
34 security configuration
34a first security configuration
34a.1 first security configuration associated with first global security level
34a.2 first security configuration associated with second global security level
34a.3 first security configuration associated with third global security level
34b second security configuration
34b.1 second security configuration associated with first global security level
34b.2 second security configuration associated with second global security level
34b.3 second security configuration associated with third global security level
34c third security configuration
34c.1 third security configuration associated with first global security level
34c.2 third security configuration associated with second global security level
34c.3 third security configuration associated with third global security level
34d fourth security configuration
34d.1 fourth security configuration associated with first global security level
34d.2 fourth security configuration associated with second global security level
34d.3 fourth security configuration associated with third global security level
34e fifth security configuration
34e.1 fifth security configuration associated with first global security level
34e.2 fifth security configuration associated with second global security level
34e.3 fifth security configuration associated with third global security level
34f sixth security configuration
34f.1 sixth security configuration associated with first global security level
34f.2 sixth security configuration associated with second global security level
34f.3 sixth security configuration associated with third global security level
34g seventh security configuration
34g.1 seventh security configuration associated with first global security level
34g.2 seventh security configuration associated with second global security level
34g.3 seventh security configuration associated with third global security level
36 network system information
38 activity parameter
40 network port identifier
40a first port identifier
40b second port identifier
42 network address
44 network resource identifier
46 network access control identifier
48 network message identifier
50 data permission
52 process identifier
54 priority level
56 configuration data
58 global security scale
60 global security level
60a first global security level
60b second global security level
60c third global security level

## Claims

1. A computer-implemented method for generating a security configuration (34) for a network system (10), the network system (10) including a plurality of interconnected network devices (12) for network communication, wherein at least one network device (12) includes a management module (18) for managing activity in said network device (12) according to a corresponding activity configuration (32), the method comprising:
a) Automatically determining network system information (36) based on the one or more network devices (12) connected with said at least one network device (12); and
b) Automatically generating, for said at least one management module (18), a corresponding security configuration (34) based on the network system information (36) determined in step a).

2. The method according to claim 1, **characterized in that** the activity includes network accessing, network communication, data accessing, and/or data processing.

3. The method according to any of the preceding claims, **characterized in that** each management module (18) respectively includes one, several, or all of the following:
- a network access control module (20) for permitting and/or denying network access;
- a firewall module (22) for filtering, permitting, and/or denying network communication;
- an intrusion detection module (24) for monitoring malicious activity and/or policy violation;
- a network routing module (26) for forwarding and/or distributing network communication;
- a data access control module (28) for permitting and/or denying data access and/or data processing; and/or
- a priority management module (30) for priority managing network communication and/or data processing.

4. The method according to any of the preceding claims, **characterized in that** the network system information (36) is further based on:
a1) information on said at least one network device (12), information on one or
more network devices (12) that are directly and/or indirectly connected with said at least one network device (12), information on one or more network devices (12) connected for network communication from and/or to said at least one network device (12), and/or information on all network devices (12) in the network system (10); and/or
a2) a topology of the network system (10), wherein the topology includes one or
more network connections (14) between two corresponding network devices (12) and, preferably, a direction of said one or more network connections (14); and/or a3) an architecture of the network system (10), between the network devices (12),
and/or based on the network communication, said architecture preferably including a network device (12) as client and a network device (12) as server; and/or a4) simulated and/or actual recorded activity; and/or
a5) a predefined activity configuration (32); and/or
a6) a user input.

5. The method according to any of the preceding claims, **characterized in that** the network system information (36) further includes one, several, or all of the following:
- a network port identifier (40) for identifying a network protocol;
- a physical and/or logical port identifier for identifying a physical or logical port, respectively,
- a network address (42) and/or a network resource identifier (44);
- a network access control identifier (46) for authenticating and/or authorizing network activity;
- a network message identifier (48) for identifying a network message;
- a data permission (50) for defining permissions for data accessing and/or data processing;
- a process identifier (52) for identifying a data process;
- a priority level (54) for network communication and/or data processing;
- information on an encryption and/or compression method;
- information on a service application; and/or
- any other information and/or activity parameter (38) related to any network device (12) and/or activity thereof in the network system (10).

6. The method according to any of the preceding claims, **characterized in that** step b) further comprises one or both of the following:
b1) Defining instructions for adding, removing, changing, increasing, decreasing, enabling, disabling, and/or hardening one or more activity parameters (38) related to activity in the network system (10); and/or
b2) Defining one or more security rules for managing activity.

7. The method according to any of the preceding claims, **characterized in that** step b) further comprises:
b3) Defining a global security scale (58) for network communication in the network system (10), the global security scale (58) including a plurality of global security levels (60); and
b4) Generating, for each global security level (60), a corresponding security configuration (34) that is associated with the respective global security level (60).

8. The method according to any of the preceding claims, **characterized in that** step b) further comprises:
b5) Deducing an expected activity in the network system (10) based on the network system information (36) determined in step a);
b6) Comparing the expected activity with a simulated and/or actual recorded activity in the network system (10); and
b7) Generating the corresponding security configuration (34) based on step b6).

9. The method according to any of the preceding claims, further comprising one or both of the following:
d1) Adapting said at least one network device (12) for secure network communication by applying the corresponding security configuration (34) to said at least one network device (12) and/or management module (18) thereof; and/or
d2) Selecting a global security level (60) for network communication in the network system (10), and adapting a plurality of network devices (12) for network communication on the selected global security level (60) by applying to a plurality of different network devices (12) and/or management modules (18) thereof corresponding security configurations (34) that are associated with the selected global security level (60).

10. A computing device comprising means adapted to execute the steps of the method according to any of the preceding claims.

11. A computer program comprising instructions to cause a computing device to execute the steps of the method according to any of the claims 1 to 9.

12. Configuration data (56) comprising instructions to cause at least one network device (12) to adapt for secure network communication in a network system (10) according to a corresponding security configuration (34), the corresponding security configuration (34) being generated based on the computer-implemented method according to any of the claims 1 to 9.

13. A computer-readable storage medium having stored thereon the computer program of claim 11 and/or the configuration data (56) of claim 12.

14. A network device (12) for network communication in a network system (10), the network device (12) comprising means adapted for secure network communication in the network system (10) based on the method according to any of the claims 1 to 9 and/or the configuration data (56) of claim 12.

15. A network system (10), comprising a plurality of interconnected network devices (12) for network communication, the plurality including at least one network device (12) according to claim 14.
